# EUROPÄISCHE PATENTSCHRIFT

(11) **EP 0 724 101 B1**
(45) Veröffentlichungstag und Bekanntmachung des Hinweises auf die Patenterteilung: **02.02.2000**
(21) Anmeldenummer: 96101531.0
(22) Anmeldetag: 26.11.1991
(51) Int. Cl.: F16L 3/015, H02G 11/00

(54) **Leitungsführungsanordnung mit Nutgrundverbreiterung**
Pipe guide arrangement having a groove with enlarged base
Dispositif de guidage de tuyaux avec rainure à base élargie

(43) Veröffentlichungstag der Anmeldung: 31.07.1996
(62) Teilanmeldung aus: 91120167.1
(73) Patentinhaber: Kabelschlepp Gesellschaft mit beschränkter Haftung, 57074 Siegen (DE)
(72) Erfinder: Meier, Karl, 91180 Heideck (DE); Steff, Josef, 91802 Meinheim (DE); Trieb, Karl-Heinz, 91710 Gunzenhausen (DE)
(74) Vertreter: Kahlhöfer, Hermann, Dipl.-Phys.

(56) Entgegenhaltungen:
- CH-A- 361 538
- DE-U- 8 811 440
- US-A- 3 473 769
- US-A- 3 630 325

## Beschreibung

Die Erfindung betrifft eine Leitungsführungsanordnung mit mindestens einem Leitungsaufnahmekanal für mindestens eine lose darin angeordnete Leitung.

Aus der US-A-3 630 325 ist eine Leitungsführungsanordnung bekannt, deren Leitungsaufnahmekanal als geschlossenes Rohr ausgebildet ist, das mit einer Vielzahl in Kanallängsrichtung im Abstand voneinander auftretender Quertrennungen versehen ist, damit der Leitungsaufnahmekanal unter Bildung eines ersten Trums und eines parallel dazu geführten zweiten Trums sowie eines schleifenartigen Übergangs zwischen den beiden Trums umbiegbar ist. Die Leitungsaufnahmekanalenden sind mit einer feststehenden bzw. mit einer in Längsrichtung des Leitungsaufnahmekanals hin- und herbeweglichen Einrichtung verbindbar. Die Quertrennungen erstrecken sich durch einen Deckenbereich hindurch in Seitenwandbereiche des Leitungsaufnahmekanals und setzen sich mindestens bis in die Nähe eines Bodenbereichs des Leitungsaufnahmekanals fort, um die Schleifenbildung zwischem ersten und zweitem Trum zu ermöglichen.

Leitungen, die in dem Leitungsaufnahmekanal dieser bekannten Leitungsführungsanordnung geführt werden sollen, müssen von einem Längsende des Leitungsaufnahmekanals aus eingefädelt werden.

Aus der DD-A-265 449 ist eine ähnliche Leitungsführungsanordnung bekannt, deren Leitungsaufnahmekanal jedoch aus einem elastischen Band gebildet ist, dessen beide Längsseiten durch Schnitte quer zur Längsrichtung in gewählten Abständen zueinander und mit gewählter Schnittlänge in ein Zugband mit quer zur Längsrichtung weisenden und profilierten Zungen ausgebildet ist. Von entgegengesetzten Längsseiten des elastischen Bandes sich erstreckende Zungen bilden einen geschlossenen oder nicht ganz geschlossenen Kanal, der ein den Kanalinnenraum füllendes Bandkabel aufnimmt. Im Fall des nicht ganz geschlossenen Kanals ist die Lücke zwischen den sich gegenüberstehenden Zungen klein im Verhältnis zur Breite des Bandkabels. Das Bandkabel muß daher auch in diesem Fall von einem Längsende des Kabelaufnahmekanals aus in diese Leitungsführungsanordnung eingefädelt werden.

Aus der US-A-3 473 769 ist eine Leitungsführungsanordnung bekannt, die einen Leitungsaufnahmekanal aufweist, der gebildet ist durch einen streifenförmigen Träger, von dessen beiden Längsseiten gleichmäßig in Längsrichtung beabstandete Leitungshaltungsbügel hochstehen, welche den Träger je überbrücken. Einen zum Träger parallel verlaufenden Brückenteil eines jeden Leitungshaltebügels kann man öffnen, um eine Leitung in den Leitungsaufnahmekanal einzulegen, und danach wieder mittels eines Schnappverschlusses schließen.

Man braucht bei dieser bekannten Leitungsführungsanordnung zwar die Leitungen nicht mehr von einem Ende des Leitungsaufnahmekanals aus einzufädeln, man muß aber nach dem Einlegen der Leitungen in den geöffneten Leitungsaufnahmekanal eine Vielzahl von Brückenteilen in Schnappschließstellung bringen. Beides ist insbesondere bei langen Leitungsführungsanordnungen mühsam.

Die genannten Lösungen erfordern entweder einen bestimmten Montageaufwand, um einen zunächst offenen Leitungsaufnahmekanal nach dem losen Einlegen einer oder mehrerer Leitungen zu schließen, oder sie erfordern einen Einfädelvorgang von einem Ende des Leitungskanals her, was insbesondere bei Leitungsführungsanordnungen erheblicher Länge und/oder Leitungen geringer Eigensteifigkeit Mühe bereiten kann.

Der Erfindung liegt die Aufgabe zugrunde, bei einer Leitungsführungsanordnung der eingangs angegebenen Art mit mindestens einem Leitungsaufnahmekanal das Einbringen der einen oder mehreren Leitungen in den Leitungsaufnahmekanal zu erleichtern.

Die erfindungsgemäße Lösung dieser Aufgabe ist im Anspruch 1 angegeben. Vorteilhafte Weiterbildungen der Erfindung sind in den abhängigen Ansprüchen angegeben.

Mit vor- oder auskragend ist vorliegend gemeint, daß der Decken- bzw. Seitenbereich nur einen Endes festgelegt ist und von diesem Ende frei vorsteht.

Die erfindungsgemäße Leitungsführungsanordnung ermöglicht nicht nur das Eindrücken der mindestens einen Leitung von der Außenseite des Leitungsaufnahmekanals her in einer Richtung quer zur Längserstreckung des Leitungsaufnahmekanals sondern diese Eindrückbarkeit wird durch die sich verbreiternden Nutgründe der Quernuten besonders gut ermöglicht. Denn diese Nutgrundverbreiterung verbessert die Biegebeweglichkeit der zwischen den einzelnen Quernuten befindlichen Abschnitte des Leitungsaufnahmekanals quer zu dessen Längserstreckung, da die für den Biegewiderstand verantwortlichen Nutabstandslängen zwischen den verbreiterten Nutgründen kleiner sind als wenn die Nutgründe nicht verbreitert wären. Außerdem wirken die Nutgrundverbreiterungen der Gefahr entgegen, daß es zu einem unkontrollierten Einreißen an den unteren Nutenden kommt.

Die Quertrennungen werden vorzugsweise durch Quernuten mit Nutgründen gebildet, die sich gegenüber der restlichen Nutbreite in Form eines umgekehrten T verbreitern.

Die erfindungsgemäße Lösung ist auch anwendbar bei Ausführungsformen von Leitungsführungsanordnungen, wie sie in der nachveröffentlichten eigenen EP-A-0 490 022 gezeigt sind.

Geht man von einem Leitungsaufnahmekanal aus, wie er in Fig. 23 der EP-A-0 490 022 gezeigt ist, versieht man erfindungsgemäß eine Wand des rechteckigen Leitungsaufnahmekanals, beispielsweise dessen Decke oder eine Seitenwand, mit einer Längstrennung derart, daß die Decke bzw. die Seitenwand mindestens einen sich von einer anderen Kanalwand aus vorkragenden bzw. auskragenden Federbereich aufweist. Die Längstrennung kann dabei in der Mitte der Decke bzw. der Seitenwand oder an deren Übergang zu einer der beiden angrenzenden Kanalwände verlaufen. Im ersteren Fall weist die Decke bzw. Seitenwand zwei zueinander hingerichtete vorkragende Federbereiche auf, die sich je nur über einen Teil der Kanalbreite erstrecken. Im letzteren Fall weist die Decke bzw. Seitenwand einen vorkragenden Federbereich auf, der sich über die gesamte Kanalbreite erstreckt. Im letzteren Fall kann man beide an die Längstrennung angrenzenden Kanalwände federn nachgiebig ausbilden, so daß man die Leitung bzw. Leitungen wahlweise von der einen oder der anderen der beiden an die Längstrennung angrenzenden Kanalwände in den Leitungsaufnahmekanal hineindrücken kann, oder auch unter federndem Ausweichen dieser beiden an die Längstrennung angrenzenden Kanalwände.

Um das Eindrücken der Leitung bzw. Leitungen in den Leitungsaufnahmekanal zu erleichtern, kann die mit der Längstrennung ausgebildete Kanalwand mit ihrem vorkragenden Ende bzw. ihren vorkragenden Enden zum Inneren des Leitungsaufnahmekanals hingeneigt sein, um eine Leitungseinführungshilfe zu bilden.

Wenn die Leitungsführungsanordnung mehrere Leitungen oder Kabel führen soll, kann man entweder einen einzigen Leitungaufnahmekanal verwenden, der für die Aufnahme aller Leitungen bzw. Kabel ausgelegt ist, oder man kann die Leitungsführungsanordnung mit mehreren parallel nebeneinander verlaufenden Leitungsaufnahmekanälen ausbilden, die entweder in einer einstückig geformten oder extrudierten Leitungsaufnahmekanalanordnung nebeneinander gebildet sind oder die durch festes oder lösbares Verbinden mehrerer einzelner Leitungsaufnahmekanäle aneinander zu einem Leitungsaufnahmekanalverbund verbunden sind. Dabei weist jeder dieser Leitungsaufnahmekanäle eine Kanalwand mit einem vorkragenden Federbereich auf.

Bei der erfindungsgemäßen Leitungsführungsanordnung bildet man die Längstrennung vorzugsweise in dem Deckenbereich des Leitungsaufnahmekanals aus, also in derjenigen Kanalwand, die im schleifenartigen Übergangsbereich zwischen Obertrum und Untertrum außen liegt. In der Decke angeordnete und sich in die benachbarten Seitenwände bis zum der Decke gegenüberliegenden Kanalboden hin erstreckende Quertrennungen sind vorgesehen, um dem Leitungsaufnahmekanal die Schleifenbiegung zu ermöglichen.

Bei relativ großen Bewegungsstrecken von horizontal hin- und herbeweglichen Einrichtungen kommt es zu entsprechend großen Obertrumlängen dann, wenn sich die bewegliche Einrichtung in derjenigen Endstellung befindet, die zur kürzesten Untertrumlänge führt. Bei einer raschen Bewegung oder beweglichen Einrichtung in Richtung zu dem zwischen Obertrum und Untertrum gebildeten Schleifenbereich, insbesondere mit starker Beschleunigung der beweglichen Einrichtung, kommt es aufgrund der auf das Obertrum einwirkenden Schubkraft leicht zu Verwerfungen des Obertrums unter Buckel- oder gar Knickbildung. Dies führt zu einer starken mechanischen Belastung der Leitungsführungsanordnung und der damit geführten Leitungsanordnung.

Dieses Problem wird bei einer Ausführungsform der Erfindung dadurch überwunden, daß in einem Leitungsführungskanal eine Niederhalteeinrichtung angeordnet ist, welche das Obertrum in dem Bereich zwischen dem feststehenden Leitungsanordnungsende und derjenigen Endstellung des beweglichen Leitungsanordnungsendes in welcher das Untertrum am kürzesten ist, am Boden des Leitungsführungskanals niederhält.

Die Niederhalteeinrichtung wird vorzugsweise durch zwei Niederhalteleisten gebildet, die sich in Längsrichtung des Leitungsführungskanals in etwa über den Bereich zwischen dem feststehenden Leitungsanordnungsende und derjenigen Endstellung des beweglichen Leitungsanordnungsendes, in welcher das Untertrum am kürzesten ist, erstrecken, die von je einer der beiden einander gegenüberliegenden Seiteninnenwände des Leitungsführungskanals in Richtung aufeinanderzu abstehen und die in einem lichten Abstand vom Boden des Leitungsführungskanals verlaufen, der etwas größer ist als die Dicke der Leitungsanordnung.

Besonders vorteilhaft ist es, die Niederhalteeinrichtung bei einer Leitungsführungsanordnung anzuwenden, in deren Schleifenbereich eine mit dem Schleifenbereich mitbewegliche Rolle angeordnet ist, auf welcher die Leitungsführungsanordnung bei einer Bewegung der Leitungsführungsanordnung abrollt. Die Rolle weist vorzugsweise einen Durchmesser auf, der größer ist als der Schleifendurchmesser der Leitungsführungsanordnung bei nicht vorhandener Rolle. In besonders bevorzugter Weise ist die Rolle lose in dem Schleifenbereich angeordnet. Der Rollenumfang sollte gegenüber der Leitungsführungsanordnung bzw. dem Leitungsaufnahmekanal eine solche Reibung aufweisen, daß die Leitungsführungsanordnung bzw. der Leitungsaufnahmekanal bei einer auf das Obertrum einwirkenden Schubkraft nicht vom Rollenumfang abhebt. Deshalb ist der Rollenumfang vorzugsweise mit einem Material wie Gummi oder relativ weichem Kunststoff aufgebaut, das im Zusammenwirken mit dem Material der Leitungsführungsanordnung bzw. des Leitungsaufnahmekanals zu einer Reibungskraft führt, daß ein derartiges Abheben der Leitungsführungsanordnung bzw. des Leitungsaufnahmekanals von dem Rollenumfang vermieden wird.

Die Rolle verhindert einerseits bleibende buckelartige Verformungen der Leitungsführungsanodnung bzw. des Leitungsaufnahmekanals in Folge längeren Stillstands der beweglichen Einrichtung. Andererseits kann mit der Rolle der gewünschte Schleifendurchmesser vorgegeben werden. Desweiteren wirkt sich die Rolle als Dämpfungsglied aus, das Schwingungen dämpft, die bei schneller Hin- und Herbewegung der beweglichen Einrichtunng im Obertrumbereich auftreten.

Die Erfindung wird nun anhand von Ausführungsbeispielen näher erläutert. In den Zeichnungen zeigen:
- **Fig. 1**: eine perspektivische Darstellung einer erfindungsgemäßen Leitungsführungsanordnung mit einem einzigen Leitungsaufnahmekanal in perspektivischer Darstellung;
- **Fig. 2**: eine Stirnseitenansicht der in Fig. 1 gezeigten Leitungsführungsanordnung;
- **Fig. 3**: eine Stirnansicht einer gegenüber Fig. 1 modifizierten Leitungsführungsanordnung;
- **Fig. 4**: eine Stirnansicht der in den Fig. 1 und 2 gezeigten Ausführungsform, jedoch mit einer Trennwand innerhalb des Leitungsaufnahmekanals;
- **Fig. 5**: eine Stirnansicht einer Ausführungsform gemäß Fig. 3, jedoch mit einer Trennwand in dem Leitungsaufnahmekanal;
- **Fig. 6**: eine Stirnansicht einer Leitungsführungsanordnung mit vier Leitungsaufnahmekanälen;
- **Fig. 7**: eine Stirnansicht einer Leitungsführungsanordnung mit drei Leitungsaufnahmekanälen, die je mit einer Trennwand versehen sind;
- **Fig. 8**: eine Ausführungsform eines Leitungsaufnahmekanals, bei dem eine Längstrennung zwischen einem Seitenende des Deckenbereichs und der benachbarten Seitenwand vorgesehen ist;
- **Fig. 9**: eine Ausführungsform, bei welcher eine Längstrennung am oberen Ende einer Seitenwand vorgesehen ist;
- **Fig. 10**: eine Ausführungsform, wie sie in Fig. 1 gezeigt ist, jedoch mit modifizierten Quertrennungen;
- **Fig. 10 und 11**: in schematisierter Seitenansicht eine Leitungsführungsanordnung mit Niederhalteeinrichtung, wobei in den Fig. 10 und 11 entgegengesetzte Endpositionen der beweglichen Einrichtung dargestellt sind;
- **Fig. 12**: eine Querschnittsdarstellung einer Leitungsführungsanordnung mit einer Niederhalteeinrichtung gem. Fig. 10 und 11; und
- **Fig. 13 und 14**: in schematischer Seitendarstellung eine Leitungsführungsanordnung mit einer im Schleifenbereich angeordneten Rolle.

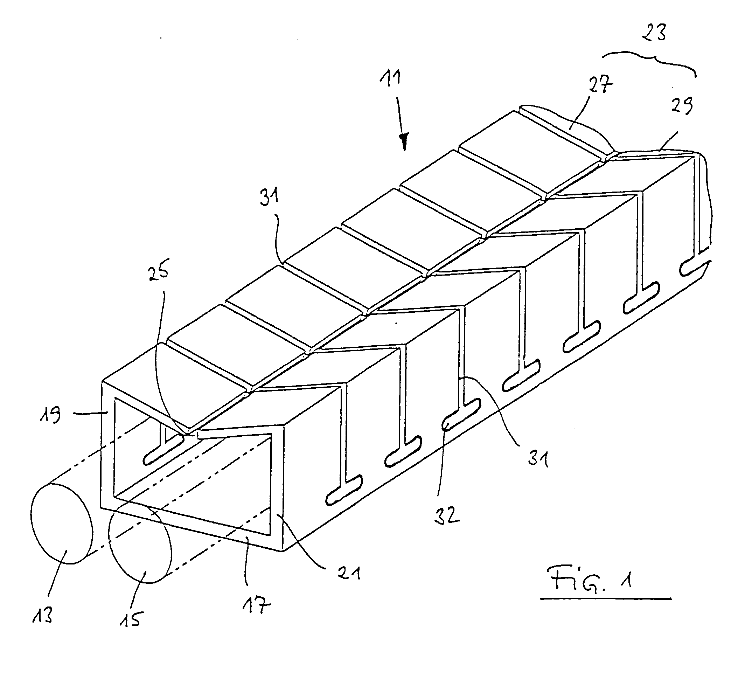

Fig. 1 zeigt in perspektivischer Darstellung eine erste Ausführungsform einer Leitungsführungsanordnung in Form eines Leitungsaufnahmekanals 11, der beispielsweise zwei nebeneinander angeordnete Rundleitungen 13 und 15 aufnehmen kann, die in Fig. 1 durch strichpunktierte Linien angedeutet sind. Der Leitungsaufnahmekanal 11 weist einen Boden 17, eine linke Seitenwand 19, eine rechte Seitenwand 21 und eine Decke 23 auf. Die Decke 23 ist durch eine in ihrer Mitte in Kanallängsrichtung verlaufende Längstrennung 25 in einen linken Deckenbereich 27 und einen rechten Deckenbereich 29 unterteilt. Jeder der beiden Deckenbereiche 27 und 29 ist von seinem Längsseitenrand ausgehend zur Längstrennung 25 hin etwas zum Kanalinnenraum hin geneigt. Dadurch ergibt sich eine Art Einführhilfe, die das Eindrücken einer Leitung in den Innenraum Leitungsaufnahmekanals 11 erleichtert.

Der Leitungsaufnahmekanal 11 ist mit in seiner Längsrichtung periodisch aufeinanderfolgenden Quertrennungen 31 versehen, die sich durch beide Deckenbereiche 27 und 29 hindurch und in die je benachbarte Seitenwand 19 bzw. 21 hinein erstrecken, vorzugsweise bis zu dem Übergang der jeweiligen Seitenwand 19 bzw. 21 mit dem Boden 17. Dabei sind die Quertrennungen 31 durch Quernuten gebildet, deren Nutgründe 32 sich in Form eines umgekehrten T verbreitern. Diese Nutgrundverbreiterung verbessert die Biegebeweglichkeit des Leitungsaufnahmekanals 11 und beseitigt die Gefahr, daß es zu einem unkontrollierten Einreißen an den unteren Nutenden kommt.

Der Leitungsaufnahmekanal 11 besteht aus einem elastischen, d. h., federnd nachgiebigen Material. Aufgrund dieser Federeigenschaft können die Deckenbereiche 27 und 29 federnd zum Kanalinnenraum hin ausgelenkt werden, wenn eine Leitung oder ein Kabel in den Leitungsaufnahmekanal 11 eingedrückt werden soll. Diese Federfähigkeit wird durch das Vorhandensein der Quertrennungen 31 gefördert.

Ist die Leitungsführungsanordnung zwischen einer feststehenden Einrichtung und einer relativ zu dieser hin- und herbeweglichen Einrichtung so lang, daß sich das jeweilige Obertrum auf dem Untertrum ablegt, stellt man den Leitungsaufnahmekanal 11 aus einem Material mit guten Gleiteigenschaften her, damit Obertrum und Untertrum mit ihren Bodenbereichen gut aufeinander gleiten können. Die Schleifenbildung am Übergang zwischen Obertrum und Untertrum wird durch die Quertrennungen 31 ermöglicht.

Es besteht allerdings auch die Möglichkeit, lediglich den Boden 17 aus gut gleitendem Material herzustellen, oder auf dem Boden 17 ein Material mit guter Gleitfähigkeit aufzubringen.

Vorzugsweise wird der Leitungsaufnahmekanal aus einem elastischen Kunststoff mit guter Gleitfähigkeit hergestellt, beispielsweise Polypropylen. Es können auch andere Kunststoffe oder Metalle, beispielsweise Stahl, verwendet werden.

Die Höhe der Seitenwände 19 und 21, die Neigung der beiden Deckenbereiche 27 und 29 sowie die Breite der Längstrennung 25 sind so gewählt, daß die freien Enden der Deckenbereiche 27 und 29 dann, wenn die Kabel oder Leitungen 13 und 15 durch die längs getrennte Decke 23 hindurch bis zum Boden 17 des Leitungsaufnahmekanals 11 gedrückt sind, in ihre Ausgangsposition zurückfedern können. In Fig. 1 sind die Leitungen übertrieben dick dargestellt. In Wirklichkeit sind sie für die Abmessungen des dargestellten Leitungsaufnahmekanals dünner oder flacher.

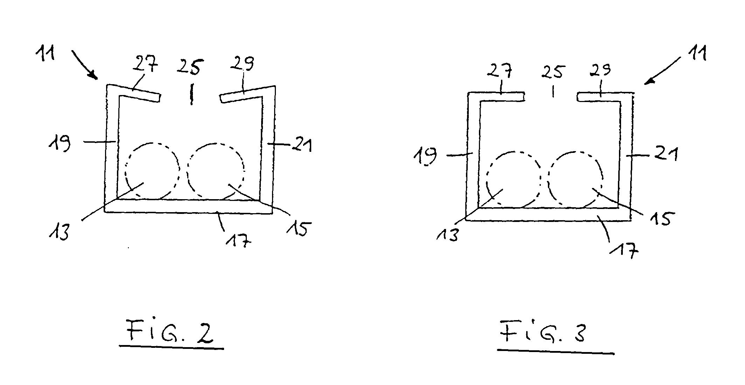

In Fig. 2 ist die in Fig. 1 gezeigte Ausführungsform eines Leitungsaufnahmekanals 11 zusammen mit den darin untergebrachten Rundleitungen 13 und 15 nochmals in Stirnansicht gezeigt.

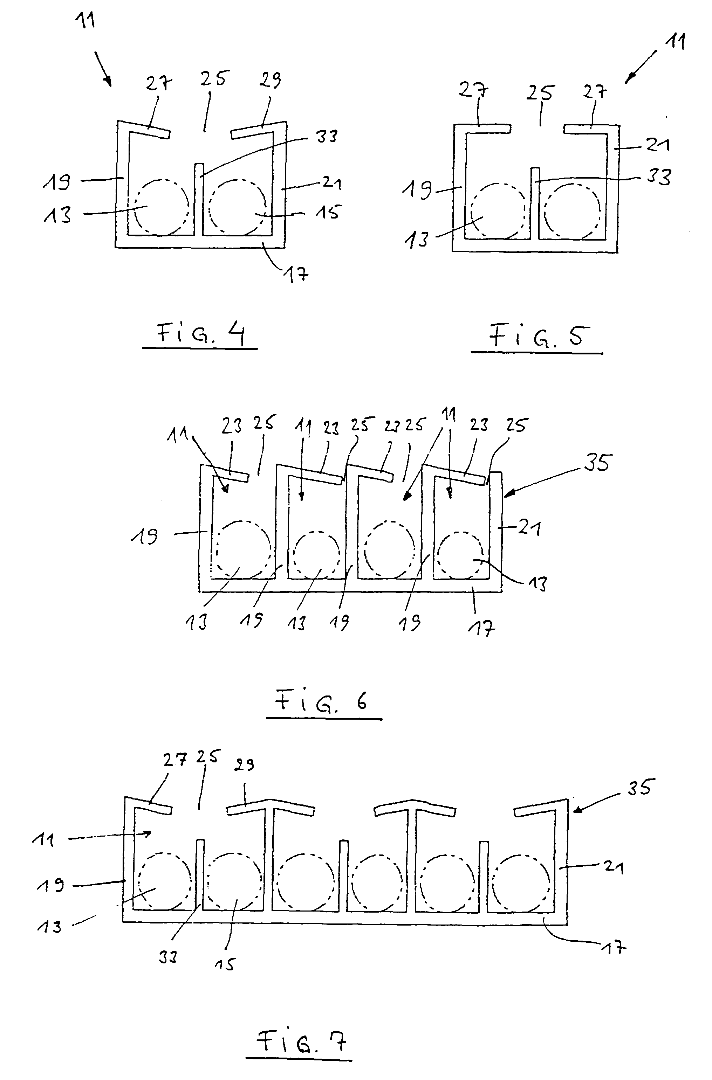

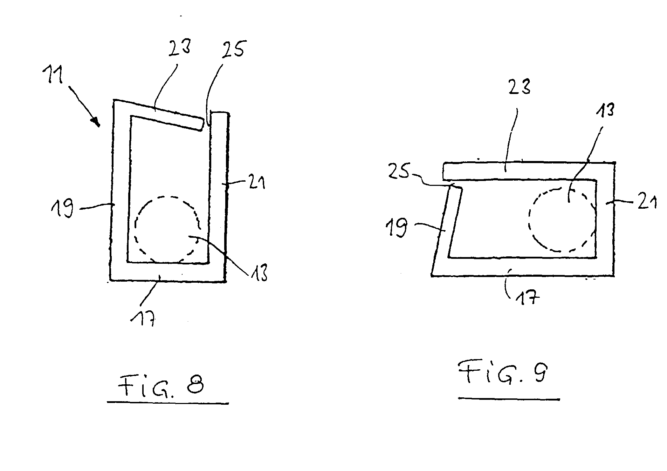

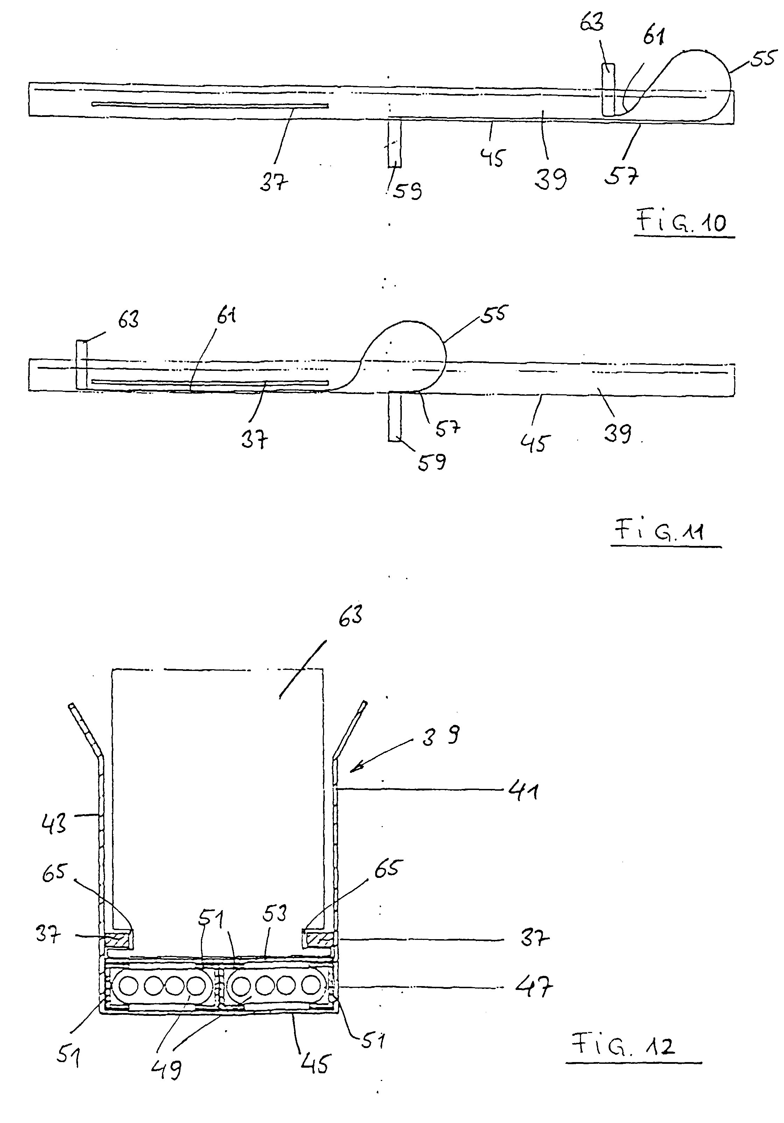

Eine ähnliche Ansicht zeigt Fig. 3, jedoch für eine Ausführungsform eines Leitungsaufnahmekanals 11, bei dem die voneinander getrennten Deckenbereiche 27 und 29 nicht geneigt sind, sondern parallel zum Boden 17 verlaufen.

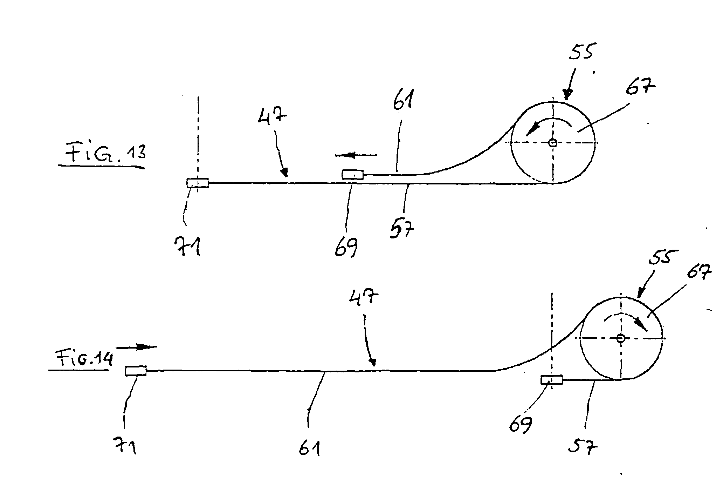

Während bei den in den Fig. 1 bis 3 gezeigten Ausführungsformen die beiden Rundleitungen 13 und 15 ohne Trennung nebeneinanderliegen können, ist bei den in den Fig. 4 und 5 gezeigten Ausführungsformen in der Mitte des Leitungsaufnahmekanals 11 je eine Leitungstrennwand 33 vorgesehen.

Die Quertrennungen 31 erstrecken sich auch durch die Leitungstrennwände 33, um eine problemlose Schleifenbildung des jeweiligen Leitungsaufnahmekanals 11 zu ermöglichen.

Die Fig. 6 und 7 zeigen Stirnansichten von Ausführungsformen, bei denen die erfindungsgemäße Leitungsführungsanordnung je mehrere parallel nebeneinander verlaufende Leitungsaufnahmekanäle aufweist.

Bei der Ausführungsform nach Fig. 6 sind in einer einstückig ausgebildeten Leitungsführungsanordnung 35 vier parallele Leitungsaufnahmekanäle 11 angeordnet, in denen bei dem dargestellten Beispiel je eine Rundleitung 13 angeordnet ist. Dabei verläuft die Längstrennung 25 eines jeden dieser Leitungsaufnahmekanäle 11 am Übergang zwischen der zugehörigen Decke 23 und der in Fig. 6 je rechten Seitenwand eines jeden Leitungsaufnahmekanals 11. Die Decke 23 eines jeden Leitungsaufnahmekanals 11 ist schräg geneigt, um das Eindrücken einer Leitung in den jeweiligen Leitungsaufnahmekanal 11 zu erleichtern. Dabei erstrecken sich die Quertrennungen 31 durch alle Kanalseitenwände, um die Schleifenbiegung zu ermöglichen.

Fig. 7 zeigt eine Leitungsführungsanordnung 35 mit drei parallelen Leitungsaufnahmekanälen 11, die je zur Aufnahme zweier Rundleitungen 13 und 15 geeignet und mit mittigen Leitungstrennwänden 33 versehen sind. Die Decken 23 der einzelnen Leitungsaufnahmekanäle 11 sind je in ihrer Mitte mit einer Längstrennung 25 versehen und die dadurch entstehenden linken und rechten Deckenbereich 27, 29 sind je zur zugehörigen Leitungstrennwand 33 hin schräg geneigt.

Bei dieser Ausführungsform erstrecken sich die Quertrennungen 31 durch sämtliche Kanalseitenwände und durch sämtliche Leitungstrennwände 33 hindurch, um eine problemlose Biegung im Bereich des Schleifenübergangs zwischen Obertrum und Untertrum zu ermöglichen.

Bei den dargestellten Beispielen sind Rundleitungen 13, 15 in die Leitungsaufnahmekanäle 11 eingebracht. Selbstverständlich können auch Bandkabel eingebracht werden, beispielsweise in die Leitungsaufnahmekanäle 11, die in den Fig. 2 und 3 gezeigt sind.

Fig. 8 zeigt in Stirnansicht einen Leitungsaufnahmekanal 11, bei dem der gesamte Deckenbereich 23 vorkragend ausgebildet ist. Dabei ist eine Längstrennung 25 zwischen dem freien Ende des Deckenbereichs 23 und der benachbarten Seitenwand 21 gebildet.

Fig. 9 zeigt in Stirnansicht eine Ausführungsform, bei welcher eine Seitenwand 19 vorkragend ausgebildet ist, wobei eine Längstrennung 25 zwischen dem oberen Ende dieser Seitenwand 19 und dem Deckenbereich 23 gebildet ist. Bei dieser Ausführungsform ist die Seitenwand 19 zum Kanalinneren hin federnd nachgiebig ausgebildet. Daher kann eine Rundleitung 13 durch federnd nachgiebiges Hineindrücken der Seitenwand 19 in das Kanalinnere hineingedrückt werden.

In den Fig. 10 bis 12 ist eine Ausführungsform einer Leitungsführungsanordnung mit Niederhalteleisten in schmatischer Weise dargestellt. Die Querschnittsdarstellung in Fig. 12 zeigt einen oben offenen Leitungsführungskanal 39 mit Seitenwänden 41 und 43. Auf einem Kanalboden 45 befindet sich eine Leitungsanordnung 47 mit zwei nebeneinander angeordneten Bandkabeln, die je zwischen zwei sich seitlich gegenüberliegenden Gleitrinnen 51 angeordnet sind, wobei die vier Gleitrinnen mittels in Längsrichtung der Leitungsanordnung 47 im Abstand voneinander angeordneter Querlaschen 53 zusammen mit den Bandkabeln 49 zu der Leitungsanordnung 47 zusammengefaßt sind. In geringem Abstand oberhalb der Querlaschen 53 befinden sich die beiden Niederhalteleisten 37, die von der Innenseite je einer der beiden Seitenwände 41 und 43 in den Innenraum des Leitungsführungskanals 39 hineinragen.

Wie in den Fig. 10 und 11 angedeutet ist, ist das vom Schleifenbereich 55 abliegende Ende des Untertrums 57 mit dem oberen Ende einer feststehenden Fußplatte 59 verbunden. Das vom Schleifenbereich 55 abliegende freie Ende des Obertrums 61 ist mit einer nach oben hochstehenden, beweglichen, als Abstandshalter dienenden Kopfplatte 63 verbunden. Die Fußplatte 59 ist mit einer nicht dargestellten feststehenden Einrichtung verbunden. Die Kopfplatte 63 ist mit einer nicht dargestellten hin- und herbeweglichen Einrichtung verbunden.

Bei einer Bewegung der beweglichen Einrichtung zwischen ihren beiden Endpositionen bewegt sich die Kopfplatte 63 zwischen zwei Enbereichen, die in den Fig. 10 und 11 dargestellt sind. Die Niederhalteleisten 37 sind zwischen der Position der feststehenden Fußplatte 59 und der in Fig. 11 gezeigten linken Endstellung der Kopfplatte 63, in welcher das Untertrum 57 am kürzesten ist, angeordnet. Die Niederhalteleisten 37 sind auf diesen Bereich der Bewegungsbahn der beweglichen Kopfplatte 63 beschränkt, um einerseits nicht mit dem Schleifenbereich 55 der Leitungsanordnung 47 zu kollidieren und weil andererseits Verwerfungen und Buckelbildungen aufgrund einer raschen Bewegung der Kopfplatte 63 ohne Vorhandensein der Niederhalteleisten 37 nur dann auftreten, wenn von der Kopfplatte 63 ein besonders langes Obertrum 61 geschoben wird.

Damit die von oben in den Leitungsführungskanal 39 hineinragende Kopfplatte 63 von den Niederhalteleisten 37 unbehindert in dem Leitungsführungskanal 39 bewegt werden kann, ist die Kopfplatte 63 bei der in Fig. 12 gezeigten Ausführungsform beidseits mit je einer Aussparung 65 versehen, in welche je eine der beiden Niederhalteleisten 37 bewegungsstörungsfrei hineinragen kann.

Es wäre auch möglich, die Breite der Kopfplatte soweit zu reduzieren, daß sie geringer ist als der lichte Abstand zwischen den beiden zueinander weisenden Niederhalteleisten 37.

Die Fig. 13 und 14 zeigen eine schematisierte Seitenansicht einer Leitungsführungsanordnung, in deren Schleifenbereich eine Rolle 67 lose angeordnet ist. Der Schleifenbereich 55 der Leitungsanordnung 47 rollt auf dem Umfang der Rolle 67 ab, wenn eine bewegliche Einrichtung 69 gegenüber einer feststehenden Einrichtung 71 horizontal hin- und herbewegt wird. Dabei kommt es zu einer Verlagerung des Schleifenbereichs 55, dem die Rolle 67 folgt.

Der Begriff "Rolle" ist vorliegend sehr allgemein zu verstehen. Er soll hier walzenartige Gebilde, entweder massiv oder hohl, kugelartige Gebilde und polygonale Gebilde umfassen.

## Patentansprüche

1. Leitungsführungsanordnung mit mindestens einem einen Bodenbereich (17), einen Deckenbereich (23) und Seitenwandbereiche (19, 21) aufweisenden Leitungsaufnahmekanal (11) für mindestens eine lose darin angeordnete ein- oder mehradrige Leitung (13, 15), wobei:
der Leitungsaufnahmekanal unter Bildung eines ersten Trums und eines parallel dazu geführten zweiten Trums sowie eines schleifenartigen Übergangs zwischen den beiden Trums umbiegbar ist;
der Bodenbereich (17) des Leitungsaufnahmekanals (11), mit dem das erste Trum und das zweite Trum zueinander weisen, mit Material guter Aneinandergleitfähigkeit aufgebaut ist;
die Leitungsaufnahmekanalenden mit einer feststehenden bzw. mit einer in Längsrichtung des Leitungsaufnahmekanals (11) hin- und herbeweglichen Einrichtung verbindbar sind;
der Leitungsaufnahmekanal (11) mit einer Vielzahl in Kanallängsrichtung im Abstand voneinander auftretender Quertrennungen (31) versehen ist, die sich durch den Deckenbereich (23) hindurch erstrecken und sich in die Seitenwandbereiche (19, 21, 33) mindestens bis in die Nähe des Bodenbereichs (17) fortsetzen und dem Leitungsaufnahmekanal (11) die Schleifenbildung zwischen erstem und zweiten Trum ermöglichen;
und von dem Deckenbereich (23) und den Seitenwandbereichen (19, 21) des bzw. eines jeden Leitungsaufnahmekanals (11) mindestens einer (z. B. 23) dieser Bereiche vorkragend ausgebildet und relativ zu einem ihn tragenden Kanalwandbereich (19, 21) zum Kanalinneren hin federnd nachgiebig ist, derart, daß die mindestens eine Leitung (13, 15) von der Außenseite des Leitungsaufnahmekanals (11) aus durch den federnd nachgiebigen Bereich (27, 29) hindurch in das Innere des Leitungsaufnahmekanals (11) hineindrückbar ist und nach dem Rückfedern des federnd nachgiebigen Bereichs (27, 29) im Leitungsaufnahmekanal (11) eingeschlossen ist;
und wobei die Quertrennungen (31) durch Quernuten mit sich verbreiternden Nutgründen (32) gebildet sind.

2. Leitungsführungsanordnung nach Anspruch 1,
dadurch gekennzeichnet,
daß sich die Nutgründe (32) T-förmig verbreitern.

3. Leitungsführungsanordnung nach Anspruch 1 oder 2,
dadurch gekennzeichnet,
daß der Leitungsaufnahmekanal (11) im wesentlichen Rechteckquerschnitt aufweist und zwei Seitenwände (19, 21) und eine Decke (23) besitzt und daß die Decke (23) eine Längstrennung (25) aufweist, derart, daß sie mindestens einen sich von einer der Seitenwände (19, 21) aus vorkragenden Federbereich (27, 29) aufweist.

4. Leitungsführungsanordnung nach Anspruch 3,
dadurch gekennzeichnet,
daß die Längstrennung (25) etwa in der Deckenmitte verläuft, so daß zwei federnd nachgiebige Deckenbereiche (27, 29) gebildet sind, die sich von je einer der beiden Seitenwände (19, 21) vorkragend aufeinanderzuerstrecken.

5. Leitungsführungsanordnung nach Anspruch 3,
dadurch gekennzeichnet,
daß die Längstrennung (25) am Übergang zwischen der Decke (23) und einer ersten der beiden Seitenwände (19, 21) verläuft und die Decke (23) sich von der anderen, zweiten Seitenwand (19, 21) aus vorkragend zu der ersten Seitenwand (19, 21) hin erstreckt.

6. Leitungsführungsanordnung nach Anspruch 5,
dadurch gekennzeichnet,
daß die erste Seitenwand (19, 21) anstelle der Decke (23) oder zusätzlich zu dieser zum Kanalinneren hin federnd nachgiebig ist.

7. Leitungsführungsanordnung nach Anspruch 5 oder 6
dadurch gekennzeichnet,
daß die Decke (23) und im Fall der Ausbildung nach Anspruch 5 die Decke (23) und/oder die erste Seitenwand (19, 21) durch die Quertrennungen (31) in einzelne Federlaschen unterteilt ist bzw. sind.

8. Leitungsführungsanordnung nach Anspruch 1,
dadurch gekennzeichnet,
daß der Leitungsaufnahmekanal mit einem Kanalboden und mit von dessen beiden Längsseiten hochstehenden, in Kanallängserstreckung im wesentlichen periodisch voneinander beabstandeten, Seitenwand- und Deckenfunktion des Leitungsaufnahmekanals aufweisenden Winkelelementen gebildet ist,
daß die Winkelelemente je einen Seitenwandbereich und einen Deckenbereich, der eine in dem Leitungsaufnahmekanal angeordnete Leitung teilweise übergreift, aufweisen,
und daß mindestens die Deckenbereiche der Winkelelemente zum Kanalboden hin federnd nachgiebig sind, derart, daß die Leitung von der Außenseite des Leitungsaufnahmekanals aus durch die federnd nachgiebigen Deckenbereiche der Winkelelemente hindurch in das Innere des Leitungsaufnahmekanals hineindrückbar ist und nach dem Rückfedern der federnd nachgiebigen Deckenbereiche im Leitungsaufnahmekanal eingeschlossen ist.

9. Leitungsführungsanordnung nach einem der Ansprüche 1 bis 8,
dadurch gekennzeichnet,
daß zur Bildung einer Leitungseinführhilfe der bzw. jeder vorkragend ausgebildete, federnd nachgiebige Bereich (27, 29) mit seinem freien Ende zum Inneren des Leitungsaufnahmekanals (11) hin geneigt ist.

10. Leitungsführungsanordnung nach einem der Ansprüche 1 bis 9,
dadurch gekennzeichnet,
daß die beiden Trums ein Untertrum (57) und ein darüber führbares Obertrum (61) bilden
und daß der Leitungsaufnahmekanal (11) in einem Leitungsführungskanal (39) geführt ist, in dem eine Niederhalteeinrichtung angeordnet ist, welche das Obertrum (61) in dem Bereich zwischen dem feststehenden Leitungsaufnahmekanalende und derjenigen Endstellung des beweglichen Leitungsaufnahmekanalendes, in welcher das Untertrum (57) am kürzesten ist, am Kanalboden (45) des Leitungsführungskanals (39) niederhält.

11. Leitungsführungsanordnung nach Anspruch 10,
dadurch gekennzeichnet,
daß die Niederhalteeinrichtung durch zwei Niederhalteleisten (37) gebildet ist, die sich in Längsrichtung des Leitungsführungskanals (39) in etwa über den Bereich zwischen dem feststehenden Leitungsanordnungsende und derjenigen Endstellung des beweglichen Leitungsanordnungsendes in welcher das Untertrum (57) am kürzesten ist, erstrecken, die von je einer der beiden einander gegenüberliegenden Seitenwände (41, 43) des Leitungsführungskanals (39) in Richtung aufeinanderzu abstehen
und die in einem lichten Abstand vom Kanalboden (45) verlaufen, der etwas größer ist als die horizontale Dicke der Leitungsanordnung (47).

12. Leitungsführungsanordnung nach Anspruch 11,
wobei das Obertrumende über einen in den Leitungsführungskanal (39) hineinragenden Abstandshalter mit der sich oberhalb des Leitungsführungskanals (39) bewegenden beweglichen Einrichtung verbunden ist,
dadurch gekennzeichnet,
daß zwischen den beiden Niederhalteleisten (37) ein derartiger lichter Abstand besteht, daß der Abstandshalter zwischen den beiden Niederhalteleisten (37) hindurchbewegbar ist.

13. Leitungsführungsanordnung nach einem der Ansprüche 1 bis 12,
dadurch gekennzeichnet,
daß der Schleifenbereich (55) der Leitungsanordnung (47) um eine mit dem Schleifenbereich (55) mitbewegliche Rolle (67) herumgeführt ist, auf welcher bei einer Bewegung der beweglichen Einrichtung (69) die Leitungsanordnung (47) abrollt.

14. Leitungsführungsanordnung nach Anspruch 13,
dadurch gekennzeichnet,
daß die Rolle (67) einen Durchmesser aufweist, der größer ist als der Schleifendurchmesser des Schleifenbereichs (55) bei nicht vorhandener Rolle (67).

15. Leitungsführungsanordnung nach Anspruch 13 oder 14,
dadurch gekennzeichnet,
daß die Rolle (67) lose in dem Schleifenbereich (55) angeordnet ist.

16. Leitungsführungsanordnung nach einem der Ansprüche 13 bis 15,
dadurch gekennzeichnet,
daß der Rollenumfang mit einem Material wie Gummi oder Weichkunststoff aufgebaut ist, der im Zusammenwirken mit dem Material guter Aneinandergleitfähigkeit der Leitungsanordnung (47) eine hohe Reibungskraft bewirkt.

## Claims

1. A line guide arrangement comprising at least one line-receiving passage (11) having a bottom region (17), a cover region (23) and side wall regions (19, 21), for at least one single-wire or multi-wire line (13, 15) loosely arranged therein, wherein:
the line-receiving passage can be bent round to form a first run and a second run which is disposed parallel thereto and a loop-like transition between the two runs;
the bottom region (17) of the line-receiving passage (11), with which the first run and the second run face towards each other, is made with material affording good slidability against each other;
the line-receiving passage ends can be connected respectively to a fixed device and a device which is reciprocable in the longitudinal direction of the line-receiving passage (11);
the line-receiving passage (11) is provided with a plurality of transverse separations (31) which occur at spacings from each other in the longitudinal direction of the passage and which extend through the cover region (23) and which continue into the side wall regions (19. 21. 33) at least into the proximity of the bottom region (17) and which permit the line-receiving passage (11) to form the loop between the first and second runs;
and of the cover region (23) and the side wall regions (19, 21) of the or each line-receiving passage (11) at least one (for example 23) of said regions is of a protruding configuration and relative to a passage wall region (19, 21) carrying it is resiliently yielding towards the passage interior, in such a way that the at least one line (13, 15) can be pressed from the outside of the line-receiving passage (11) through the resiliently yielding region (27, 29) into the interior of the line-receiving passage (11) and is enclosed in the line-receiving passage (11) after the resilient return of the resiliently yielding region (11, 29);
and wherein the transverse separations (31) are formed by transverse grooves with enlarging groove bottoms (32).

2. A line guide arrangement according to claim 1 characterised in that the groove bottoms (32) are of a T-shaped enlarged configuration.

3. A line guide arrangement according to claim 1 or claim 2 characterised in that the line-receiving passage (11) is of substantially rectangular cross-section and has two side walls (19, 21) and a cover (23) and that the cover (23) has a longitudinal separation (25) in such a way that it has at least one spring region (27, 29) protruding from one of the side walls (19, 21).

4. A line guide arrangement according to claim 3 characterised in that the longitudinal separation (25) extends substantially in the centre of the cover so that there are formed two resiliently yielding cover regions (27, 29) which extend towards each other in protruding relationship from respective ones of the two side walls (19, 21).

5. A line guide arrangement according to claim 3 characterised in that the longitudinal separation (25) extends at the transition between the cover (25) and a first one of the two side walls (19, 21) and the cover (23) extends from the other second side wall (19, 21) in protruding relationship towards the first side wall (19, 21).

6. A line guide arrangement according to claim 5 characterised in that instead of the cover (23) or in addition to same the first side wall (19, 21) is resiliently yielding towards the passage interior.

7. A line guide arrangement according to claim 5 or claim 6 characterised in that the cover (23) and in the case of the structure according to claim 5 the cover (23) and/or the first side wall (19, 21) is or are subdivided by the transverse separations (31) into individual spring tongues.

8. A line guide arrangement according to claim 1 characterised in that
the line-receiving passage is formed with a passage bottom and with angle elements which are upstanding from the two longitudinal sides thereof and which are substantially periodically spaced from each other in the longitudinal extent of the passage and which have a side wall and cover function for the line-receiving passage,
the angle elements each have a side wall region and a cover region which partially engages over a line arranged in the line-receiving passage, and
at least the cover regions of the angle elements are resiliently yielding towards the passage bottom in such a way that the line can be pressed from the outside of the line-receiving passage through the resiliently yielding cover regions of the angle elements into the interior of the line-receiving passage and is enclosed in the line-receiving passage after the resilient return of the resiliently yielding cover regions.

9. A line guide arrangement according to one of claims 1 to 8 characterised in that to form a line insertion aid the or each resiliently yielding region (27, 29) of a protruding configuration is inclined with its free end towards the interior of the line-receiving passage (11).

10. A line guide arrangement according to one of claims 1 to 9 characterised in that
the two runs form a bottom run (57) and a top run (61) which can be passed thereover, and
the line-receiving passage (11) is guided in a line guide passage (39) in which there is arranged a hold-down means which holds the top run (61) down against the passage bottom (45) of the line guide passage (39) in the region between the stationary line-receiving passage end and that end position of the movable line-receiving passage end in which the bottom run (57) is at the shortest.

11. A line guide arrangement according to claim 10 characterised in that the hold-down means is formed by two hold-down bars (37) which extend in the longitudinal direction of the line guide passage (39) approximately over the region between the stationary line arrangement end and that end position of the movable line arrangement end in which the bottom run (57) is at its shortest, which project from respective ones of the two mutually oppositely disposed side walls (41, 43) of the line guide passage (39) in a direction towards each other, and which extend at an internal spacing from the passage bottom (45) which is somewhat greater than the horizontal thickness of the line arrangement (47).

12. A line guide arrangement according to claim 11 wherein the top run end is connected by way of a spacer projecting into the line guide passage (39) to the movable device which moves above the line guide passage (39), characterised in that between the two hold-down bars (37) there is an internal spacing such that the spacer can be moved through between the two hold-down bars (37).

13. A line guide arrangement according to one of claims 1 to 12 characterised in that the loop region (55) of the line arrangement (47) is passed around a roller (67) which is movable with the loop region (55) and on which the line arrangement (47) rolls upon a movement of the movable device (69).

14. A line guide arrangement according to claim 13 characterised in that the roller (67) is of a diameter which is larger than the loop diameter of the loop region (55) when the roller (67) is not present.

15. A line guide arrangement according to claim 13 or claim 14 characterised in that the roller (67) is arranged loosely in the loop region (55).

16. A line guide arrangement according to one of claims 13 to 15 characterised in that the roller periphery is constructed with a material such as rubber or soft plastic material which affords a high frictional force in co-operation with the material affording good slidability against each other of the line arrangement (47).

## Revendications

1. Dispositif de câblage comportant au moins un conduit (11) de logement de lignes, qui comprend une partie de base (17), une partie de recouvrement (23) et des parties de parois latérales (19,21), pour au moins une ligne (13,15) à un ou plusieurs conducteurs, disposée librement à l'intérieur du conduit, et dans lequel :
le conduit de logement des lignes peut être replié en formant un premier brin et un deuxième brin parallèle au précédent ainsi qu'une jonction en forme de boucle entre les deux brins ;
la partie de base (17) du conduit (11) de logement des lignes, avec laquelle le premier brin et le second brin se font face, est réalisée en un matériau possédant une bonne capacité de glissement sur lui-même ;
les extrémités du conduit de logement des lignes peuvent être reliées à un dispositif fixe ou à un dispositif mobile en va-et-vient dans la direction longitudinale du canal (11) de logement des lignes ;
le canal (11) de logement des lignes comporte une multiplicité de parois de séparation (31), qui apparaissent à distance les unes des autres dans la direction longitudinale du conduit et, traversent la partie de recouvrement (23) et se prolongent dans les parties de parois latérales (19,21,23) au moins jusqu'à proximité de la partie de base (17), et permettent, dans le conduit (11) de logement des lignes, la formation d'une boucle entre les premier et second brins ; et
parmi la partie de recouvrement (23) et les parties de parois latérales (19,21) du ou de chaque conduit (11) de logement des lignes, au moins l'une (par exemple 23) de ces parties est agencée de manière à être saillante et flexible élastiquement en direction de l'intérieur du conduit par rapport à une partie de paroi (19,21) du conduit, qui la porte, de telle sorte que la au moins une ligne (13,15) peut être repoussée à l'intérieur du conduit (11) de logement des lignes à partir du côté extérieur de ce conduit (11) de logement des lignes, à travers la partie élastiquement flexible (27,29) et est insérée dans le conduit (11) de logement des lignes, après rappel élastique de la partie flexible élastiquement (25,29) ; et
les séparations transversales (31) sont formées par des rainures transversales comportant des fonds élargis (32).

2. Dispositif de câblage, caractérisé en ce que les fonds (32) des rainures s'élargissent en forme de T.

3. Dispositif de câblage selon la revendication 1 ou 2, caractérisé en ce
que le conduit (11) de logement des lignes possède une section transversale essentiellement rectangulaire et comporte deux parois latérales (19,21) et un élément de recouvrement (23) et que l'élément de recouvrement (23) possède une séparation longitudinale (25) de telle sorte qu'il comporte au moins une partie élastique (27,29), qui fait saillie à partir de l'une des parois latérales (19,21).

4. Dispositif de câblage selon la revendication 3, caractérisé en ce
que la séparation longitudinale (25) s'étend approximativement au centre de l'élément de recouvrement en formant ainsi deux parties élastiquement flexibles (27,29) de l'élément de recouvrement, qui peuvent s'étendre l'une sur l'autre selon une disposition en saillie à partir de chacune des deux parois latérales (19,21).

5. Dispositif de câblage selon la revendication 3, caractérisé en ce
que la séparation longitudinale (25) s'étend au niveau de la jonction entre l'élément de recouvrement (23) et une première des deux parois latérales (19,21) et que l'élément de recouvrement s'étend en saillie à partir de l'autre seconde paroi latérale (19,21) en direction de la première paroi latérale (19,21).

6. Dispositif de câblage selon la revendication 5, caractérisé en ce
que la première paroi latérale (19,21) est flexible élastiquement, à la place de l'élément de recouvrement (23) ou en plus de ce dernier, en direction de la paroi du conduit.

7. Dispositif de câblage selon la revendication 5 ou 6, caractérisé en ce
que l'élément de recouvrement (23) est, dans le cas de la forme de réalisation selon la revendication 5, l'élément de recouvrement (23) et/ou la première paroi latérale (19,21) est ou sont subdivisés, par les séparations transversales (31), en des pattes élastiques individuelles.

8. Dispositif de câblage selon la revendication 1, caractérisé en ce
que le conduit de logement des lignes est formé par une base et par des éléments de cornière, qui font saillie verticalement à partir des deux côtés longitudinaux, sont distants essentiellement périodiquement les uns des autres sur l'étendue longitudinale du conduit et possèdent la fonction de paroi latérale et la fonction d'élément de recouvrement du conduit de logement des lignes,
que les éléments de cornière comportent chacun une partie de paroi latérale et une partie de recouvrement, qui s'engage en partie au-dessus d'une ligne disposée dans le canal de logement des lignes, et
qu'au moins les parties de recouvrement des éléments de cornière sont flexibles élastiquement en direction de la base du conduit de telle sorte que la ligne peut être repoussée à l'intérieur du conduit de logement des lignes à partir du côté extérieur du conduit de logement des lignes, à travers les parties de recouvrement flexibles élastiquement des éléments de cornière et est insérée dans le conduit de logement des lignes après le rappel élastique des parties de recouvrement flexibles élastiquement.

9. Dispositif de câblage selon l'une des revendications 1 à 8, caractérisé en ce
que pour la formation d'un système auxiliaire d'introduction des lignes la ou chaque partie saillante flexible élastiquement (27,29) est inclinée, par son extrémité libre, en direction de l'intérieur du conduit (11) de logement des lignes.

10. Dispositif de câblage selon l'une des revendications 1 à 9, caractérisé en ce
que les deux brins forment un brin inférieur (57) et un brin supérieur (61) pouvant être guidé au-dessus du précédent, et
que le conduit (11) de logement des lignes est guidé dans un conduit (39) de guidage des lignes, dans lequel est disposé un dispositif de retenue, qui maintient le brin supérieur (61) dans la zone située entre l'extrémité fixe du conduit de logement des lignes et la position finale de l'extrémité mobile du conduit de logement des lignes, dans laquelle le brin inférieur (57) est le plus court, sur la base (45) du conduit (39) de guidage des lignes.

11. Dispositif de câblage selon la revendication 10, caractérisé en ce
que le dispositif de retenue est formé par deux barrettes de retenue (37), qui s'étendent dans la direction longitudinale du conduit (39) de guidage des lignes, approximativement dans la zone située entre l'extrémité fixe de disposition des lignes et la position finale de l'extrémité mobile du dispositif de ligne, dans laquelle le brin inférieur (57) est le plus court, et qui font saillie en direction l'un de l'autre à partir de l'une respective des deux parois latérales réciproquement opposées (41,43) du conduit (39) de guidage des lignes, et
qui s'étendent à une faible distance de la base (45) du conduit, qui est légèrement supérieure à l'épaisseur horizontale du dispositif de lignes (47).

12. Dispositif de câblage selon la revendication 11,
dans lequel l'extrémité du brin supérieur est reliée au dispositif mobile, qui se déplace au-dessus du conduit (39) de guidage des lignes, par l'intermédiaire d'une entretoise qui pénètre dans le conduit (39) de guidage des lignes,
caractérisé en ce
qu'entre les deux barrettes de retenue (37) il existe une faible distance telle que l'entretoise est déplaçable entre les deux barrettes de retenue (37).

13. Dispositif de câblage selon l'une de revendications 1 à 12, caractérisé en ce
que la partie en boucle (55) du dispositif de lignes (47) s'étend autour d'un galet (67), qui est déplacé conjointement avec la partie en boucle (55) et sur lequel le dispositif de lignes (47) roule lors d'un déplacement du dispositif mobile (69).

14. Dispositif de câblage selon la revendication 13, caractérisé en ce
que le rouleau (67) possède un diamètre qui est supérieur au diamètre de la partie en boucle (55) dans le cas où le rouleau (67) est absent.

15. Dispositif de câblage selon la revendication 13 ou 14, caractérisé en ce
que le rouleau (67) est monté de façon lâche dans la partie en boucle (55).

16. Dispositif de câblage selon l'une des revendications 13 à 15, caractérisé en ce
que la périphérie du rouleau est réalisée en un matériau tel que du caoutchouc ou une matière plastique souple, qui fournit une force élevée de frottement en coopération avec le matériau, qui présente une bonne capacité de glissement sur lui-même, du dispositif de lignes (47).
